# EUROPÄISCHE PATENTANMELDUNG

(11) **EP 1 918 063 A1**
(43) Veröffentlichungstag der Anmeldung: **07.05.2008**
(21) Anmeldenummer: 06022872.3
(22) Anmeldetag: 02.11.2006
(51) Int. Cl.: B23K 35/02, B23K 35/30, B23K 103/08

(54) **Komposit-Lötpulver aus Kern und metallischer Hülle, zum Löten von Turbinenbauteilen**

(71) Anmelder: SIEMENS AKTIENGESELLSCHAFT, 80333 München (DE)
(72) Erfinder: Heinecke, Brigitte, Dr., 45468 Mühlheim an der Ruhr (DE); Vosberg, Volker, Dr., 45476 Mühlheim an der Ruhr (DE)

(57) **Zusammenfassung**

Das erfindungsgemäße Lotverfahren verwendet ein Lotmaterial aus Körnern, bei dem der Füllstoff (Kern) durch eine metallische Hülle ummantelt ist, was eine Entmischung verhindert und eine gleichmäßige Verteilung des Füllwerkstoffs ermöglicht.
Der Kern besteht vorzugsweise aus einer Keramik oder einer Superlegierung und die Hülle ist ein metallisches Lot. Der Durchmesser der Pulverteilchen kann im Nanometerbereich liegen.

## Beschreibung

Die Erfindung betrifft ein Pulverteilchen, das aus einem Kern und einer metallischen Hülle besteht, ein Bauteil mit den Pulverteilchen sowie ein Verfahren zum Löten, bei dem solche Pulverteilchen verwendet werden.

Im Rahmen der Instandsetzung von Turbinenbauteilen kann es erforderlich sein, mechanisch beanspruchte Fügungen wie die Reparatur von Rissen vorzunehmen. Dazu wird üblicher Weise ein Schweiß- oder Lötverfahren verwendet. Hochtemperaturlote basieren auf einer Legierung, die für das Substrat verwendet werden und der Schmelzpunkt erniedrigende Elemente zugesetzt sind. Ebenso werden Füllmaterialien dem Lot hinzugefügt, die in die Matrix des Lotmaterials eingebettet werden, um die mechanischen Eigenschaften zu erhöhen. Jedoch kommt es oft zu einer Entmischung zwischen dem Füllwerkstoff und dem Lotmaterial.

Es ist daher Aufgabe der Erfindung oben genanntes Problem zu überwinden.

Die Aufgabe wird gelöst durch ein Pulverteilchen gemäß Anspruch 1 ein Bauteil gemäß Anspruch 22 und ein Verfahren gemäß Anspruch 26.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Verfahren nach dem Stand der Technik,
- Figur 2: ein Pulverteilchen,
- Figur 3: ein modifiziertes Pulverteilchen,
- Figur 4: ein Verfahren zum Löten,
- Figur 5: eine Gasturbine,
- Figur 6: perspektivisch eine Turbinenschaufel,
- Figur 7: perspektivisch eine Brennkammer und
- Figur 8: Liste der Superlegierungen.

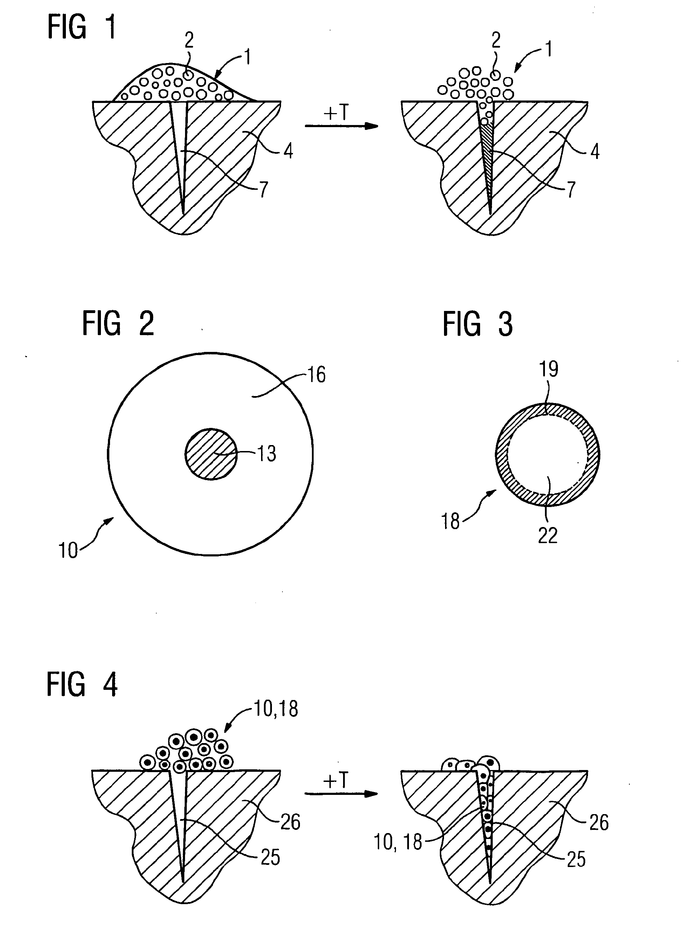

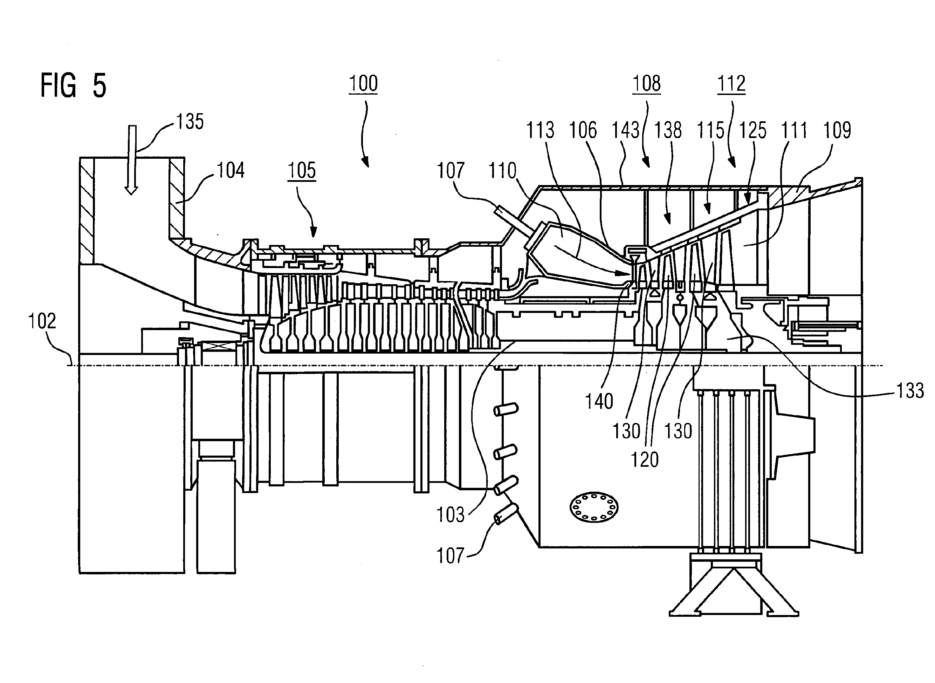

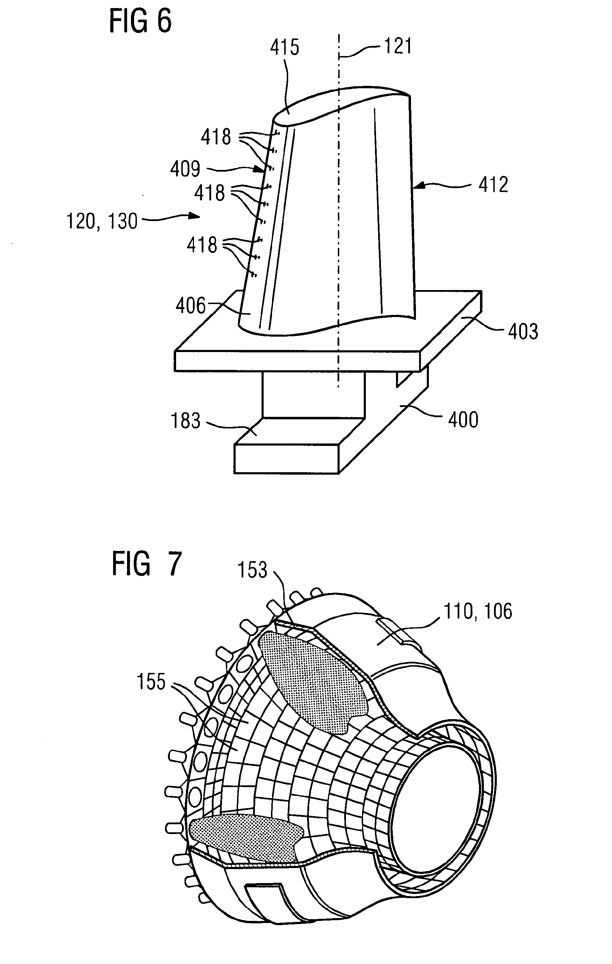

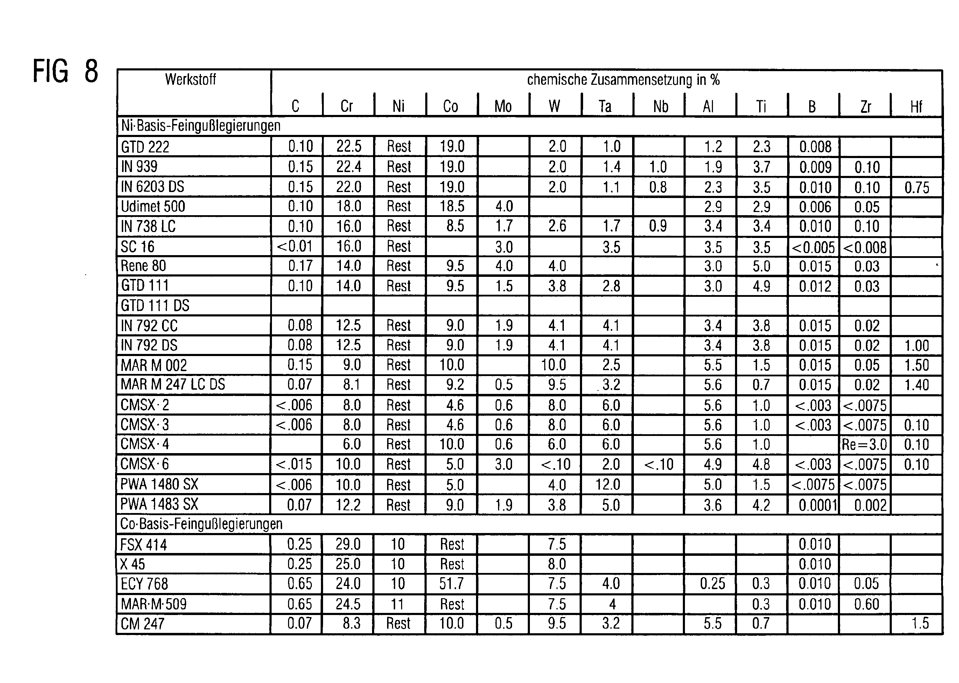

Nach dem Stand der Technik ist in einem Substrat 4 eines Bauteils 120, 130 (Fig. 5, 6), 155 (Fig. 7) ein Riss 7 vorhanden (Fig. 1), der beim Löten mit einem Lotmaterial 1 gefüllt wird. Das Lotmaterial 1 weist ein metallisches Material auf. Füllstoffe 2 werden zur Steigerung der Festigkeit des Lotmaterials 1 verwendet.
Das Substrat des Bauteils 120, 130, 155 besteht aus einer Superlegierung, wie sie vorzugsweise in Figur 8 aufgelistet sind.

Beim Löten, also bei der Zuführung von Wärme (+T) kann es zur Entmischung kommen, weil das Lot des Lotmaterials, das aufschmilzt, sich in den Riss 7 hineinzieht und der Füllstoff 2 zurückbleibt oder aufgrund unterschiedlicher Korngrößen es zu einer Entmischung von aufgeschmolzenen Lotpulverkörnern und Füllstoffkörnern kommt.
Der Füllstoff 2 schmilzt beim Löten nicht oder nicht vollständig auf.

Figur 2 zeigt ein Pulverteilchen 10 für ein Bauteil 120, 130, 155 für ein Lotverfahren.

Das Pulverteilchen 10 besteht aus einem Kern 13 und einer Hülle 16. Die Hülle 16 umhüllt den Kern 13, insbesondere vollständig.

Das Matrixmaterial der Hülle 16 ist metallisch (auch eine Legierung), vorzugsweise ist die Hülle 16 nur metallisch.

Der Kern 13 weist vorzugsweise ein nichtmetallisches Material auf. Der Kern 13 ist vorzugsweise keramisch und/oder aus Glas. Der Kern 13 kann eine Keramik, wie Aluminiumoxid, Zirkonoxid und/oder Yttriumoxid sein.
Ebenso vorzugsweise ist der Kern 13 auch metallisch, vorzugsweise kann er die y'-Phase Ni₃Al aufweisen oder eine Superlegierung (vorzugsweise Rene 80) (Fig. 8) sein, die beim Löten nicht aufschmilzt. Vorzugsweise ist das Material des Kerns 13 eine Y'-gehärtete Nickelbasissuperlegierung. Ein Beispiel für den metallischen Kern 13 ist Rene 80.

Die metallische Hülle 16 ist ein bekanntes Lot aus dem Stand der Technik oder ein Material, das einen, insbesondere um mindestens 10 Kelvin niedrigeren Schmelzpunkt als der Kern 13 oder das Substrat 26 des Bauteils 120, 130, 155 aufweist.

Beispiele für vorzugsweise verwendete Kombinationen von Kern 13 und Hülle 16 sind:

| **Kern 13** | **Hülle 16** |
|---|---|
| Rene 80 | Amdry DF4B |
| IN 738 | Amdry DF4B |
| IN 939 | Amdry DF3 |
| Rene 80 | Praxair BRB |
| Rene 80 | Amdry BRB |

Vorzugsweise werden für die Hülle 16 AMDRY-Lote (Lieferer: Sulzer Metco) verwendet.

Der Durchmesser des Pulverteilchens 10 kann im Nanometerbereich liegen, um eine Befüllung von engen, schmalen Spalten 25 zu ermöglichen. Das Pulverteilchen 10 kann aus einem oder mehreren Körnern bestehen.

Figur 3 zeigt ein weiteres Pulverteilchen 18, bei dem ein Kern 13 vorhanden ist, der insbesondere aus einer nickel-oder kobaltbasierten Superlegierung (Figur 8) besteht, in dessen Randbereich vorzugsweise ein Schmelzpunkterniedriger, wie z.B. Bor (B), Kohlenstoff (C), Hafnium (Hf), Silizium (Si) und/oder Zirkon (Zr) eindiffundiert wurde oder vorhanden sind. Vorzugsweise ist nur ein Schmelzpunkterniedriger vorhanden.
Durch die Eindiffusion dieses Schmelzpunkterniedrigers können sich auch keramische Phasen bilden. Die Matrix der Hülle 19 bleibt jedoch metallisch.

Dieses Pulverteilchen 18 wird also beispielsweise aus einem Pulverteilchen eines Superlegierungspulvers 22 gebildet, in dem eine Diffusionsschicht 19 im Randbereich gebildet wird. Ebenso kann ein weiteres, vorzugsweise ein metallisches Element in ein Superlegierungsteilchen eindiffundiert (alitiert) werden, welches durch eine geänderte Zusammensetzung den Schmelzpunkt erniedrigt. Beispiele dafür sind Aluminium (Al), Titan (Ti) und/oder Tantal (Ta).

Figur 4 zeigt eine Anwendung der Pulverteilchen als Lotmaterial.

Dabei werden die Pulverteilchen 10 in Pastenform oder ähnlicher Art und Weise auf den Riss 25 aufgetragen.
Ebenso ist es möglich die Pulverteilchen 10 mittels HVOF oder Kaltgasspritzen in auf oder um den Riss 25 aufzutragen. Während der Lotbehandlung, bei der Wärme zugeführt wird (+T) kommt es zu keiner Entmischung des Füllmaterials wie beim Stand der Technik, sondern eine gleichmäßige Verteilung des Kerns, so dass das Füllmaterial gleichmäßig verteilt ist.

Ebenso kann das Verfahren beim Schweißen angewendet werden.

Insbesondere kann bei der Verwendung von Pulverteilchen 10 gemäß Figur 3 der Kern 13 aus einer Superlegierungszusammensetzung bestehen, die die gleiche Zusammensetzung aufweist wie das Substrat 26 des zu reparierenden Bauteils 120, 130, 155.

Ein solches Bauteil 26 ist beispielsweise eine Turbinenschaufel 120, 130 (Figur 4, 5) oder ein Brennkammerelement 155 (Figur 7), das vorzugsweise aus einen nickel- oder kobaltbasierten Superlegierung gemäß Figur 8 besteht.

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).
Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Pulverteilchen (10) aus einem Kern (13) mit metallischer Hülle (16),
wobei das Material des Kerns (13) von dem Material der Hülle (16) verschieden ist.

2. Pulverteilchen nach Anspruch 1,
bei dem das Material des Kerns (13) nicht metallisch ist.

3. Pulverteilchen nach Anspruch 1 oder 2,
bei dem der Kern (13) eine Keramik aufweist, insbesondere Aluminiumoxid, Yttriumoxid, Zirkonoxid und/oder Chromoxid aufweist.

4. Pulverteilchen nach Anspruch 1 oder 2,
bei dem der Kern (13) aus einer Keramik besteht, insbesondere aus Aluminiumoxid, Yttriumoxid, Zirkonoxid und/oder Chromoxid besteht.

5. Pulverteilchen nach Anspruch 1 oder 2,
bei dem der Kern (13) Glas aufweist oder glaskeramisch ist.

6. Pulverteilchen nach Anspruch 1,
bei dem der Kern (13) ein Metall oder eine Legierung aufweist.

7. Pulverteilchen nach Anspruch 1,
bei dem der Kern (13) aus einem Metall oder aus einer Legierung besteht.

8. Pulverteilchen nach Anspruch 6,
bei dem der Kern (13) Ni₃Al aufweist.

9. Pulverteilchen nach Anspruch 7,
bei dem der Kern (13) aus Ni₃Al besteht.

10. Pulverteilchen nach Anspruch 6,
bei dem der Kern (13) eine nickel- oder kobaltbasierte Superlegierung aufweist.

11. Pulverteilchen nach Anspruch 7,
bei dem der Kern (13) aus einer nickel- oder kobaltbasierten Superlegierung besteht.

12. Pulverteilchen nach Anspruch 10 oder 11,
bei dem der Kern (13) Rene 80 aufweist oder aus Rene 80 besteht.

13. Pulverteilchen nach Anspruch 10 oder 11,
bei dem der Kern (13) IN738 aufweist oder aus IN738 besteht.

14. Pulverteilchen nach Anspruch 10 oder 11,
bei dem der Kern (13) IN939 aufweist oder aus IN939 besteht.

15. Pulverteilchen nach einem oder mehreren der vorherigen Ansprüche, bei dem das Material der Hülle (16) einen niedrigeren Schmelzpunkt aufweist als das Material des Kerns (13).

16. Pulverteilchen nach einem oder mehreren der vorherigen Ansprüche,
bei dem die Hülle (16) um den Kern (13) aus einem Lotmaterial besteht.

17. Pulverteilchen nach einem oder mehreren der vorherigen Ansprüche, bei dem das Material der Hülle (16) ein Amdry-Pulver aufweist oder aus einem Amdry-Pulver besteht.

18. Pulverteilchen nach einem oder mehreren der vorherigen Ansprüche,
bei dem die Hülle (16) um den Kern (13) durch eine Diffusionsschicht gebildet ist.

19. Pulverteilchen nach Anspruch 18,
bei dem die Diffusionsschicht durch die Diffusion von zumindest einem Schmelzpunkterniedriger, insbesondere Bor (B), Kohlenstoff (C), Hafnium (Hf), Silizium (Si) und/oder Zirkon (Zr) gebildet ist.

20. Pulverteilchen nach Anspruch 15, 16, 17, 18 oder 19, das einen einzigen Schmelzpunkterniedriger aufweist.

21. Pulverteilchen nach einem oder mehreren der vorherigen Ansprüche,
bei dem das Pulverteilchen (10) ein Durchmesser im Nanometerbereich aufweist, insbesondere Korngrößen ≤ 700nm, insbesondere ≤ 500nm aufweist.

22. Bauteil (120, 130, 155),
das Pulverteilchen (10) nach einem oder mehreren der Ansprüche 1 bis 21 enthält.

23. Bauteil nach Anspruch 22,
dessen Substrat (26) eine nickel- oder kobaltbasierte Superlegierung aufweist.

24. Bauteil nach Anspruch 23,
bei dem der Kern (13) des Pulverteilchens (10) dieselbe Superlegierung wie das Substrat aufweist.

25. Bauteil nach Anspruch 23,
bei dem das Material der Hülle (16) einen niedrigeren Schmelzpunkt aufweist als das Material des Substrats (26) des Bauteils (120, 130, 155).

26. Verfahren zum Löten eines Bauteils (26) mit einem Riss (25),
bei dem Pulverteilchen gemäß ein oder mehreren der vorherigen Ansprüche 1 bis 21 verwendet werden.

27. Verfahren nach Anspruch 26,
bei dem das Bauteil (26) eine Superlegierung aufweist und bei dem für den Kern (13) die gleiche Superlegierungszusammensetzung verwendet wird.

28. Verfahren nach Anspruch 26 oder 27,
bei dem die Pulverteilchen (10) mittels HVOF auf oder in den Riss (25) aufgetragen werden.

29. Verfahren nach Anspruch 26 oder 27,
bei dem das Kaltgasspritzen verwendet wird,
um die Pulverteilchen (10) auf oder in den Riss (25) aufzutragen.
